# EUROPEAN PATENT APPLICATION

(11) **EP 2 431 889 A1**
(43) Date of publication of application: **21.03.2012**
(21) Application number: 10174850.7
(22) Date of filing: 01.09.2010
(51) Int. Cl.: G06F 17/30

(54) **Content transformation for lean-back entertainment**

(71) Applicant: Axel Springer Digital TV Guide GmbH, 10117 Berlin (DE)
(72) Inventor: Proidl, Adolf, 1102 Wien (AT); Barbieri, Mauro, 5613 LC Eindhoven (NL); Pronk, Serverius Petrus Paulus, 5262 CN Vught (NL); Korst, Jan, 5616 BL Eindhoven (NL)
(74) Representative: Eisenführ, Speiser & Partner

(57) **Abstract**

The present invention relates to an apparatus, a method and a computer program product for adapting a document with actively selectable content, e.g., web-based content, for consumption in a lean-back mode. The document is rendered in a way that it can be optimally consumed in the lean-back mode. The multimedia content of the document (images, text, etc.) is transformed into a continuous information flow (e.g. video) that can be rendered as if it were a television channel, for example.

## Description

### FIELD OF THE INVENTION

The present invention relates to an apparatus, a method, and a computer program product for transforming actively selectable content, such as web-based content, into a continuous information flow for passive consumption.

### BACKGROUND OF THE INVENTION

The World Wide Web or Internet is becoming ubiquitous in our society. The Internet is accessed for multiple reasons using desktop computers, laptops, personal digital assistants (PDA's) or mobile phones. Soon any electronic device will be connected allowing access to all kinds of web services and information from the Internet. More and more people use the Internet as main source of their entertainment. Web sites such as, e.g., video or music download sites, are immensely popular and attract very large audiences, comparable with, if not bigger than television (TV).

One disadvantage of using current Internet websites for entertainment is that they require a "lean-forward" active user involvement and participation. Users have to navigate through links, search and select the content they wish to consume and cannot just lean back and watch as in the case of watching TV programs. On the contrary, TV and radio are extremely popular means of receiving information passively, the so-called "lean-back" entertainment. There is no indication that this will be replaced by any lean-forward means of entertainment.

In the following, content adaptation is meant to be an action of transforming content to adapt to device capabilities. Content adaptation may be related to mobile devices that require special handling because of their limited computational power, small screen size and constrained keyboard functionality. Content adaptation techniques have been developed to make websites easily accessible from devices with limited capabilities, such as limited memory, limited processing power, no mouse, and/or small screens. One approach is to transform the layout of web pages so that the content fits better with small form-factor screens. Additionally, special navigation functions may be added (such as easy zoom-in and zoom-out) to allow navigating large pages. A lot of progress in automatic content adaptation has been made and recently many hand-held devices, such as mobile phones, offer web browsing capabilities.

Current adaptation approaches for presenting documents with actively selectable content (e.g. web-based content) on TV screens involve content adaptation or consumer electronics hyper transfer mark-up language (CE-HTML). CE-HTML is a language for creating user interface pages for consumer electronics (CE) devices such as TVs. However, these approaches are limited as they are either very complex (CE-HTML requires designing and publishing separate dedicated versions of web pages) or not suitable for lean-back passive consumption. They require user interaction that becomes often awkward as most websites are designed for point-and-click interfaces.

### SUMMARY OF THE INVENTION

It is an object of the present invention to provide an enhanced content adaptation or transformation process and apparatus which allow lean-back consumption of documents with actively selectable content without point-and-click interfaces.

This object is achieved by a method as claimed in claim 1, an apparatus as claimed in claim 13, and a computer program product as claimed in claim 14.

Accordingly, a document with actively selectable content can be rendered in a way that it can be readily consumed in a lean-back mode without requiring a point-and-click interface (e.g. mouse or other pointer interface). The multimedia content of the document (images, text, etc.) can be transferred into video and/or audio information that can be rendered as if it were, e.g., a TV channel.

In case of a multimedia document, the at least one information flow may comprise a video information flow and an audio information flow. Thereby, the at least one information flow can be conveyed via broadcast video or TV channel and consumed by using a TV or other video display device.

According to a first aspect, the active blocks may be separately rendered so as to be displayed at a predetermined position on a display screen and to provide the user interaction via a remote control device. Thus, the user can interact with the active blocks by using his remote control device.

According to a second aspect, which could be combined with the first aspect, an active control element may be added for each hyperlink target of the document on the display screen to allow the user to skip a corresponding content of said at least one information flow. Thereby, the user can individually select by his remote control whether to use the hyperlink.

According to a third aspect, which could be combined with the first or second aspect, a hyperlink could be rendered by visualizing a corresponding text on the display screen and allowing the user to select it. This allows hyperlinks to stay visible and selectable on the display screen.

According to a fourth aspect, which could be combined with any of the first to third aspects, the partitioning may involve page segmentation based on at least one of a document object model, a location-based method and a vision-based method. Thus, each page of the document can be automatically divided based on at least one predetermined criterion.

According to a fifth aspect, which could be combined with any of the first to fourth aspects, the assigning may be based on at least one of a spatial feature, a content feature and a template-based approach. The block priority can thus be automatically assigned based on different criteria.

According to a sixth aspect, which could be combined with any of the first to fifth aspects, the blocks may be filtered based on their block priority so as to discard blocks with a block priority below a predetermined threshold. Thereby, blocks with low importance to the user can be discarded from the continuous information flow.

According to a seventh aspect, which could be combined with any of the first to sixth aspects, active blocks may be marked with a predetermined label, and the rendering may be controlled based on the label. This facilitates rendering of the blocks after linearization.

According to an eighth aspect, which could be combined with any of the first to seventh aspects, blocks with text content may be translated into an audio information flow using speech synthesis. This provides the advantage that the user does not need to read text information from the display screen, which may be inconvenient due to resolution constraints.

According to a ninth aspect, which could be combined with any of the first to eighth aspects, predetermined information may be in the document, the predetermined information describing additional blocks to be inserted among passive blocks in the at least one continuous information flow. Such blocks advantageously allow insertion of auxiliary information such as advertisements or user guiding information.

According to a tenth aspect, which could be combined with any of the first to ninth aspects, the assigning of the block priority may be based on a user feedback. Thereby, threshold calculation for priority allocation can be automatically controlled by the user feedback obtained, e.g., from a recommender system.

According to an eleventh aspect, which could be combined with any of the first to tenth aspects, user-specific dynamic parts of a web page to be rendered, may be selected based on a browsing behaviour of a user in a fixed editorial part of the web page. Thereby, the transformation of web page elements into the information flow is influenced by the browsing behaviour of the user in the editorial part.

It is noted that the above apparatus can be implemented as discrete hardware circuitry with discrete hardware components, as an integrated chip, as an arrangement of chip modules, or as a signal processing device or computer device or chip controlled by a software routine or program stored in a memory.

### BRIEF DESCRIPTION OF THE DRAWINGS

The invention will now be described, by way of example, based on embodiments with reference to the accompanying drawings, wherein:
Fig. 1 shows a schematic block diagram of a content transformation device according to a first embodiment of the present invention;
Fig. 2 shows a flow diagram of a procedure for transforming a document with actively selectable content into a continuous information flow according to a second embodiment;
Fig. 3 shows an example of two web pages partitioned into blocks with indicated priorities; and
Fig. 4 shows an exemplary animation sequence for rendering an image with portrait aspect ratio.

### DESCRIPTION OF EMBODIMENTS

Embodiments of the present invention will now be described based on an exemplary web-to-video transformation system which may be provided in combination with an optional recommender system that relies upon user feedback.

According to the following embodiments, a web page is transformed and rendered in a way that it can be optimally consumed in a lean-back mode. To achieve this, the multimedia content of the web page (images, text, etc.) is transformed into a video flow that can be rendered as if it were a TV channel.

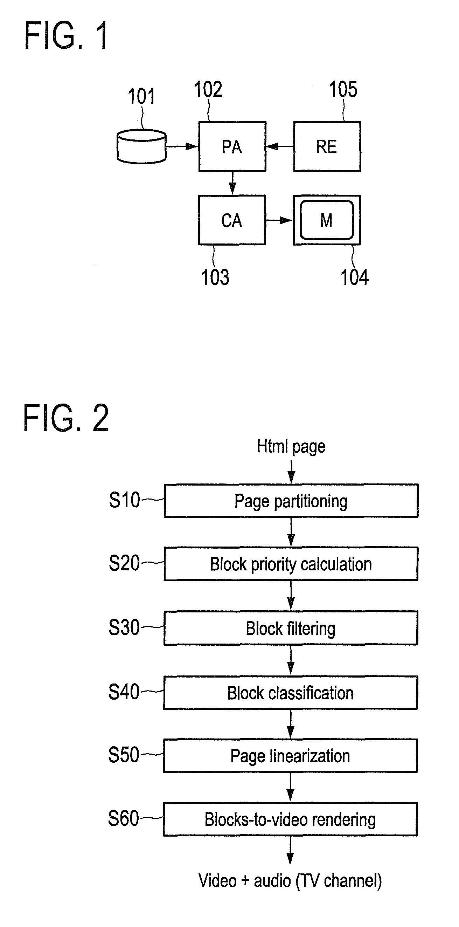

Fig. 1 shows a schematic block diagram of a transformation device or system with optional recommender functionality, which comprises a data store 101 (e.g. a hard disk drive) in which web pages can be stored for later transformation in a content adapter (CA) 103. The stored web pages are supplied to a priority allocator 102 adapted to partition the web page into blocks that are consistent and represent some logical division of the content of the web page, and to assign to each block a block priority based on an importance of the block within the web page.

The content adapter 103 receives blocks with allocated block priority, classifies these blocks into active blocks which require user input and passive blocks which only include content for passive consumption, and orders these blocks at least based on their block priority to obtain a presentation order for the video flow. The ordered blocks are then rendered by the content adapter 103 in the form of video plus audio, wherein the active blocks are separated so that a user can interact with them by using his/her remote control, for example.

The source (not shown) of the web pages may, for example, be a web browser application for providing access to the Internet. After transformation, the rendered web pages can be displayed on a display screen of a TV monitor (M) 104, stored on a removable or non-removable data store or record carrier, or broadcast via a TV or video channel. Retrieved web pages may optionally be filtered and then supplied to a respective recommender engine (RE) 105. The recommender engine 105 may have a user profile associated therewith. The output of the recommender engine 105 may be used by a priority allocator (PA) 102 to assign block priorities to identified blocks of web pages to be rendered. As an example, the block priority calculation can be adapted for each web page depending on user feedback. If, for a given web site, or web page, the user decreases the block filtering threshold, the system adapts the threshold to all the websites that exhibit similar characteristics (e.g. similar layout). A naive Bayesian classifier can be used to automatically adapt the threshold calculation based on user feedback. Alternatively, based on the text available in the block, the subject or genre can be automatically estimated by a classifier and given the learned preferences of the user, the priority can be set accordingly.

The operation of the transformation apparatus will now be described in more detail with reference to Fig. 2.

Fig. 2 shows a flow diagram of a procedure for transforming a document with actively selectable content into a continuous information flow according to a second embodiment.

We consider as input a web page (e.g. a hypertext markup language (HTML) page) that can be obtained by connecting via the web browser to a web server using, e.g., the hypertext transfer protocol (HTTP). It is assumed that all elements referenced in the web page, such as images, videos, sounds, etc., are downloaded and available (e.g. in the data store 101).

The first step or stage S10 of the procedure comprises partitioning the web page into a set of semantic blocks. Each block is selected as a region of the web page that is consistent and represents some logical division depending on the content of the web page. Several methods for web page partitioning are known in the art. Examples which can be applied here are document object model (DOM) based segmentation as described in Chen, J., Zhou, R, Shi, J., Zhang, H.-J. and Qiu, F., "Function-Based Object Model Towards Website Adaptation", Proc. of the 10lk World Wide Web Conference, Budapest, Hungary, May 2001, location-based segmentation as described in Kovacevic, M., Diligenti, M., Gori, M., and Milutinovic, V., "Recognition of Cornmon Areas in a Web Page Using Visual Information: a possible application in a page classification", Proc. Of the 2002 IEEE lnt. Conference on Data Mining, Maebashi City, Japan, December 2002, and vision-based page segmentation as described in Cai, D., Yu, S., Wen, J.-R. and Ma, W.-Y., "VIPS: a vision-based page segmentation algorithm", Microsoft Technical Report, MSR-TR-2003-79, 2003.

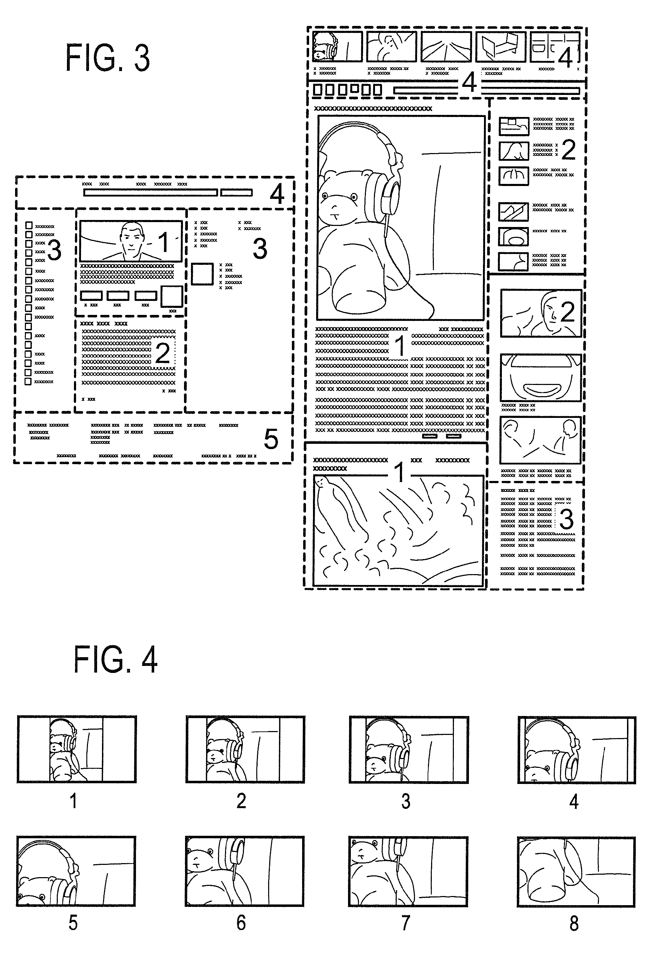

Fig. 3 shows an example of two web pages partitioned into blocks indicated by dashed rectangles with their allocated priorities. It is noted that each block can be recursively partitioned into sub-blocks (e.g., header title, image and text) and each sub-block into sub-sub blocks (e.g., paragraphs in a text block).

In the second step or stage S20 a block priority is calculated and assigned to each block. The block priority may for example be determined as a priority score that is inversely proportional to the importance of each block within a page (i.e., most important blocks have priority score "1"). Many web pages suitable for being watched on a TV screen are such that there is one main element that attracts a viewer's attention, surrounded by one or more additional elements that provide options for navigation to and selection of other content. Different information inside a web page has different importance depending on the location in the page, the area occupied and of course the content itself. For example, not many users pay much attention the copyright notices which appear at the bottom of many web pages.

Referring to the example of Fig. 3, the most recent news items in the centre of the left web page (priority scores "1" and "2") are more important than the links to other older new items shown in the right portion of the web page (priority score "3"), which are more important than the header and website title block (priority score "4"). Several algorithms from the pertinent literature can be used to calculate the priority of the page blocks. For example, in Song, R., Liu, H., Wen, J.-R. and Ma, W.-Y., "Learning Block Importance Models for Web Pages", Proc. Of the World Wide Web Conference, New York, USA, 2004, a classifier is used that employs spatial features (such as position and size of the blocks) and content features (such as number of images and links) to automatically calculate an importance score for a block. Furthermore, in Bar-Yossef, Z., Rajagopalan, S., "Template Detection via Data Mining and its Applications", Proc. Of the World Wide Web Conference, May 2002, a template-based approach is used to detect blocks that are repeated among pages and therefore can be assigned a low importance score.

After each block has been assigned a priority or importance score in step S20, an optional filtering step may be applied in step or stage S30 to discard those blocks that are not sufficiently important (priority too low) or that have certain undesired properties. A simple threshold and/or a set of criteria can be applied such as: keep only blocks with highest priority, discard footer blocks with copyright notice, etc. The user can control the filtering threshold. Using, for example, a button on the remote control, the user can decrease the threshold with the effect of retaining more blocks and therefore more content.

The remaining blocks are then used as input to an algorithm or procedure that classifies them either as active or passive blocks in a block classification step or stage S40. Active blocks are page elements whose main purpose is to solicit input from the users and thus require a user input. Examples are text fields for entering keywords or text, buttons, lists of options, etc. Active blocks contribute to characterize web browsing as a "lean-forward" experience as they allow the user to control and to navigate through the content.

On the other hand, passive blocks are page elements that contain mainly content meant to be passively consumed, in "lean-back" way, such as images, text, audio, and video. After this step, each highly important block that has passed the filtering step (S30) may have also received a label active/passive that will be used to control the rendering of the blocks after linearization.

In the linearization step or stage S50, a presentation order for the blocks is calculated so that they can be presented to the user one after each other. The ordering takes into account at least one of the priority of the blocks (e.g. most important blocks first), the order on the original page, and potentially available and semantically understood information like the date when a video or picture was uploaded (or a blog post or comment added to the page).

For example, in the case of the right web page of Fig. 3, the block with the title "The Biology of Music" with priority score "1" will be the first to be presented, followed by the block with the title "Guatemala" (also priority score "1"), and so forth. It is noted that, during rendering, the user can skip to the next or the previous block in the linear order. Hyperlinks that point directly to images or videos can be substituted with the corresponding targets. For example, a gallery page containing a grid of thumbnails may result, after page linearization, in a linear slide show of the images that correspond to the thumbnails. When a hyperlink is substituted with its target (e.g. an image), an active control element (such as a button) may be added to the screen to allow the user to skip the corresponding content or go back to the original page.

Optionally, after having processed the entire page, the system can retrieve from the hyperlinks in the page other pages from the same web server and add their blocks to the linear presentation. This is equivalent to defining a path through the graph of pages of a web site.

The final step S60 is the block-to-video rendering of the blocks in the form of video plus audio so that the page can be inserted in the listing of a TV channel and viewed as if it were a TV show. The rendering of the blocks depends on whether they are active or passive and, in the latter case, on the content. Active blocks may be rendered at the bottom of the TV screen. The user can interact with them using the remote control. The rendering of the passive blocks forms the main content of the web channel.

Text may be translated into audio using speech synthesis. Hyperlinks may be rendered by visualizing the corresponding text on the screen (e.g. at the bottom) and allowing the user to select them (e.g. by pressing a button on the remote control). The hyperlinks can stay visible and selectable on the screen for a fixed amount of time (e.g. five to ten seconds), or they can be made available via a special menu. Images may be rescaled and rendered as image slideshows using virtual camera operations (panning and zooming) depending on the image format (portrait/landscape, aspect ratio).

Fig. 4 shows an exemplary animation sequence for rendering an image with portrait aspect ratio. In this example, the image in the block with title "The Biology of Music" of Fig. 3, having a "portrait" aspect ratio, can be animated for rendering on a 16:9 TV screen. In Fig. 4, a virtual zoom-in operation (pictures 1 to 4) is followed by a virtual panning from top to bottom (pictures 5 to 8). The duration of the animation can be determined by the duration of the audio resulting from the speech synthesis. A maximum value for the duration of the animations can be set to prevent too slow animations.

The synchronization of images and spoken text can be refined by correlating meta-information about the image (e.g., the alt attribute) and the words occurring in the text.

Video is just rendered as is (although a virtual zoom-out or zoom-in may also be necessary) and the controls may be linked to proper buttons of the remote control. Other active blocks may be rendered just as they would be rendered on a web page.

In a third embodiment, information to guide at least one of the page partitioning in step or stage S10 and the block rendering in step or stage S60 is embedded in the web page using dedicated tags. The tags can describe additional blocks, ignored by standard web browsers, which may be inserted among content blocks after the linearization step or stage S50. Such blocks could for example allow insertion of video commercial advertisements or user guiding information or the like.

In a fourth embodiment, the web page that is transformed into video for a personal channel is composed of an 'editorial' part which is identical for all users (or a group of users, e.g. a country) and is maintained by editors, and a 'personal' part which is different for each user and changes dynamically depending on the browsing behaviour of the user. The personal part can contain information which has been provided by the user such as personal photographs or video, comments, blog posts.

In the fourth embodiment, the transformation of the web page elements into video is influenced by the browsing behaviour of the user in the editorial part (i.e. browsing history of fixed elements). Depending on the elements of the web page (editorial part) the user has interacted with, the dynamic web content is influenced and changes, so that only parts of the web page, which may be selected by the priority allocator 102 or the content adaptor 103 of Fig. 1, are rendered as video for inclusion in a personal channel. Similarly, the dynamic and personal part of the web page is updated depending on the videos (generated from the web page) the user has interacted with.

For example, if a user has interacted in his personal channel with a video representation of a photo gallery of a certain actor, the dynamic part of the web page may be updated to include more information on that particular actor.

It is noted that the present invention can be applied not only to web pages, but also to other types of documents with actively selectable content (i.e. lean-forward content). The output can be transformed into a video flow, but also into other multimedia presentation formats and standards such as Synchronized Multimedia Integration Language (SMIL), Microsoft Power Point, etc. Typically, when the input is a standard Internet address (uniform resource locator (URL)) and the resulting output is a standardized document format like SMIL, the proposed transformation can be offered as public web service that translates lean-forward content into a lean-backwards consumable content flow.

The invention is not limited to the above embodiments and can be applied to TV sets, set-top boxes, personal computers, notebooks, mobile phones, video game consoles, web services, and the like.

In summary, an apparatus, a method and a computer program product for adapting a document with actively selectable content, e.g., web-based content, for consumption in a lean-back mode have been described. The document is rendered in a way that it can be optimally consumed in the lean-back mode. The multimedia content of the document (images, text, etc.) is transformed into a continuous information flow (e.g. video) that can be rendered as if it were a television channel, for example.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. A single processor or other unit may fulfil at least the functions of Fig. 2 based on corresponding software routines. The computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope thereof.

## Claims

1. A method of transforming a document with actively selectable content into at least one continuous information flow for passive consumption, said method comprising:
a) partitioning (S10) said document into a plurality of blocks of consistent regions;
b) assigning (S20) to each of said blocks a block priority based on an importance of the block within said document;
c) classifying (S40) said blocks either as active blocks soliciting input from a user or as passive blocks containing content for passive consumption;
d) determining (S50) a presentation order for said blocks at least based on said assigned block priority; and
e) rendering (S60) said blocks in the form of said at least one continuous information flow in dependence on their classification and content, wherein active blocks are separately rendered to enable user interaction during passive consumption.

2. The method according to claim 1, wherein said at least one information flow comprises a video information flow and an audio information flow.

3. The method according to claim 2, wherein said active blocks are separately rendered so as to be displayed at a predetermined position on a display screen and to provide said user interaction via a remote control device.

4. The method according to claim 3, further comprising adding for each hyperlink target of said document an active control element on said display screen to allow a user to skip a corresponding content of said at least one information flow.

5. The method according to claim 3 or 4, further comprising rendering a hyperlink by visualizing a corresponding text on said display screen and allowing a user to select it.

6. The method according to any one of the preceding claims, wherein said partitioning (S10) involves page segmentation based on at least one of a document object model, a location-based method and a vision-based method.

7. The method according to any one of the preceding claims, wherein said assigning (S20) is based on at least one of a spatial feature, a content feature and a template-based approach.

8. The method according to any one of the preceding claims, further comprising filtering (S30) said blocks based on their block priority so as to discard blocks with a block priority blow a predetermined threshold.

9. The method according to any one of the preceding claims, further comprising marking active blocks with a predetermined label, and controlling said rendering (S60) based on said label.

10. The method according to any one of the preceding claims, further comprising translating blocks with text content into an audio information flow using speech synthesis.

11. The method according to any one of the preceding claims, further comprising embedding predetermined information in said document, said predetermined information describing additional blocks to be inserted among passive blocks in said at least one continuous information flow.

12. The method according to any one of the preceding claims, further comprising controlling said assigning (S20) of said block priority based on a user feedback.

13. The method according to any one of the preceding claims, further comprising selecting user-specific dynamic parts of a web page to be rendered, based on a browsing behaviour of a user in a fixed editorial part of said web page.

14. An apparatus for transforming a document with actively selectable content into at least one continuous information flow for passive consumption, said apparatus comprising:
a) a partitioner (S10) for partitioning said document into a plurality of blocks of consistent regions;
b) a priority allocator (S20) for assigning to each of said blocks a block priority based on an importance of the block within said document;
c) a classifier (S40) for classifying said blocks either as active blocks soliciting input from a user or as passive blocks containing content for passive consumption;
d) a linearizer (S50) for determining a presentation order for said blocks at least based on said assigned block priority; and
e) a flow generator (S60) for rendering said blocks in the form of said at least one continuous information flow in dependence on their classification and content, wherein active blocks are separately rendered to enable user interaction during passive consumption.

15. A computer program product comprising code means for producing the steps of any one of method claims 1 to 13 when run on a computer device.
